# EUROPEAN PATENT APPLICATION

(11) **EP 0 662 494 A1**
(43) Date of publication of application: **12.07.1995**
(21) Application number: 94307280.1
(22) Date of filing: 05.10.1994
(51) Int. Cl.: C08J 9/14, C08G 18/38, C08G 18/32, F25D 23/06

(54) **Rigid polyurethane foams**

(30) Priority: 10.01.1994 GB 9400326
(71) Applicant: IMPERIAL CHEMICAL INDUSTRIES PLC, London SW1P 3JF (GB)
(72) Inventor: Deschaght, Joris Patrick Marnix, Nr. 03-02 La Suisse, Singapore 1128 (SG)
(74) Representative: Swinnen, Anne-Marie

(57) **Abstract**

Process for the preparation of rigid foams comprising the step of reacting an organic polyisocyanate with an isocyanate-reactive material in the presence of a blowing promotor being an isocyanate-reactive cyclic compound of formula: 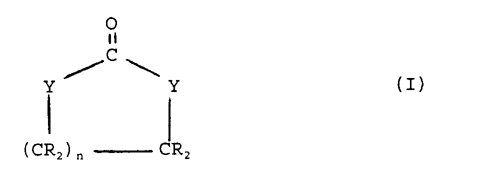
wherein
Y is O or NR¹ wherein each R¹ independently is a lower alkyl radical of C₁-C₆ or a lower alkyl radical substituted with an isocyanate-reactive group;
each R independently is hydrogen, a lower alkyl radical of C₁-C₆ or (CH₂)ₘ-X wherein X is an isocyanate-reactive group which is OH or NH₂ and m is 0, 1 or 2; and
n is 1 or 2;
with the proviso that at least one of R¹ or R is or comprises an isocyanate-reactive group;
and in the presence of an inert insoluble organic liquid which is present as the dispersed phase of an emulsion or a microemulsion and in the presence of a metal salt catalyst, wherein the isocyanate-reactive material comprises a polyol or polyol mixture of average nominal functionality between 2 and 3 and number average equivalent molecular weight between 31 and 750.

## Description

This invention relates to rigid polyurethane foams and more especially to open celled rigid polyurethane foam and to methods for their preparation and to their use in evacuated insulation panels.

The production of foamed materials based on polyurethane and other polymer systems derived from organic polyisocyanates is well established. Depending upon the formulations used in their manufacture, the products can vary in texture from the soft flexible foams used as cushioning materials to the rigid foams used as insulating or structural materials.

Rigid polyurethane foams can be of the closed cell type or of the open cell type. An important application of open celled rigid polyurethane foam is as filler material in evacuated insulation panels as described in European Patent Publications Nos 188806 and 498628.

In European Patent Publication No. 498628 a process for preparing open celled rigid polyurethane foam is described, said process comprising the step of reacting an organic polyisocyanate with an isocyanate-reactive material in the presence of a blowing promotor being an isocyanate-reactive cyclic compound of formula: 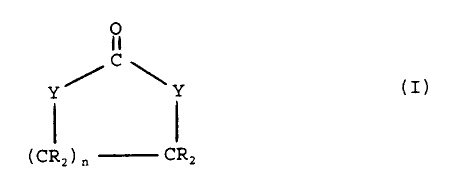
wherein
Y is O or NR¹ wherein each R¹ independently is a lower alkyl radical of C₁-C₆ or a lower alkyl radical substituted with an isocyanate-reactive group;
each R independently is hydrogen, a lower alkyl radical of C₁-C₆ or (CH₂)ₘ-X wherein X is an isocyanate-reactive group which is OH or NH₂, and m is 0, 1 or 2; and
n is 1 or 2;
with the proviso that at least one of R¹ or R is or comprises an isocyanate-reactive group;
and in the presence of an inert insoluble organic liquid which is present as the dispersed phase of an emulsion or a microemulsion and in the presence of a metal salt catalyst.

In order for such an open celled foam to be suitable as filler in evacuated insulation panels, the closed cell content of the foam must be as low as possible, preferably below 10 %.

Therefore it is an object of the present invention to provide a process for preparing open celled rigid polyurethane foams with a closed cell content below 10 %.

Accordingly the present invention provides a process for the preparation of rigid foams comprising the step of reacting an organic polyisocyanate with an isocyanate-reactive material in the presence of a blowing promotor being an isocyanate-reactive cyclic compound of formula: 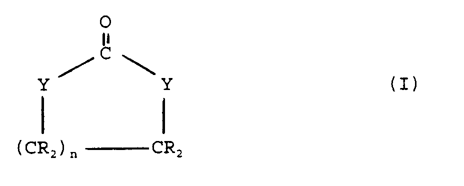
wherein
Y is O or NR¹ wherein each R¹ independently is a lower alkyl radical of C₁-C₆ or a lower alkyl radical substituted with an isocyanate-reactive group;
each R independently is hydrogen, a lower alkyl radical of C₁-C₆ or (CH₂)ₘ-X wherein X is an isocyanate-reactive group which is OH or NH₂ and m is 0, 1 or 2; and
n is 1 or 2;
with the proviso that at least one of R¹ or R is or comprises an isocyanate-reactive group;
and in the presence of an inert insoluble organic liquid which is present as the dispersed phase of an emulsion or a microemulsion and in the presence of a metal salt catalyst, characterised in that the isocyanate-reactive material comprises a polyol or polyol mixture of average nominal functionality between 2 and 3 and number average equivalent molecular weight between 31 and 750.

The polyol (mixture) for use in the process of the present invention consists of polyols generally known in the art for the production of rigid polyurethane foams. These polyols have an equivalent molecular weight of 31 to 750 (meaning that a bifunctional (functionality 2) polyol has a molecular weight of between 62 and 1500, a trifunctional (functionality 3) between 93 and 2250, etc.) and a hydroxyl value (in mg KOH/g) of between 80 and 2000.

Preferably the functionality of the polyol (mixture) for use in the process of the present invention is between 2.5 and 3, more preferably between 2.5 and 2.9 and most preferably between 2.7 and 2.9.

The prior art (EP-A-498628) describes rigid polyol (mixtures) for use in the process for making open celled rigid polyurethane foam having a functionality between 2 and 8, preferably between 3 and 8. No indication whatsoever is given about the influence of the polyol functionality on the closed cell content of the obtained foam.

Rigid polyols for use in the process of the present invention include polyether reaction products of alkylene oxides, for example ethylene oxide and/or propylene oxide, with initiators containing from 2 to 3 active hydrogen atoms per molecule. Suitable initiators include polyols, for example, glycerol, trimethylolpropane, and polyamines, for example ethylenediamine, tolylene diamine, diaminodiphenylmethane and polymethylene polyphenylene polyamines, and aminoalcohols, for example, ethanolamine, diethanolamine and triethanolamine, and mixtures of such initiators. Other suitable polyols for use in the process of the present invention include polyesters obtained by the condensation of appropriate proportions of glycols and higher functionality polyols with dicarboxylic acids. Still further suitable polyols include hydroxyl terminated polythioethers, polyamides, polyesteramides, polycarbonates, polyacetals, polyolefins and polysiloxanes.

A preferred compound of formula (I) wherein Y is O is an isocyanate-reactive cyclic carbonate which is glycerol carbonate.

Preferred compounds of formula (I) wherein Y is NR¹ are isocyanate-reactive cyclic ureas of formula: 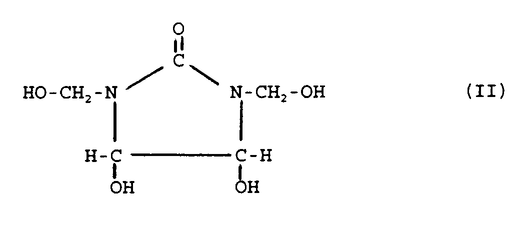
and

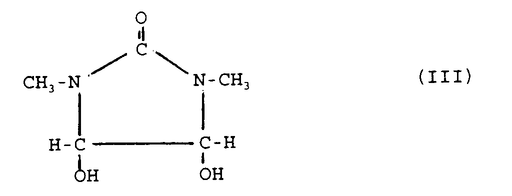

The isocyanate-reactive cyclic blowing promotor is used in amounts ranging from 1 to 99 %, preferably from 1 to 60 % by weight based on the total isocyanate-reactive material.

Suitable further blowing agents may be used in the method of the present invention such as water or inert low boiling compounds having a boiling point of above -50°C at 1 bar.

The amount of water used as blowing agent may be selected in known manner to provide foams of the desired density, typical amounts being in the range from 0.05 to 5 parts by weight per 100 parts by weight of reactive ingredients, although it may be a particular embodiment of the present invention to incorporate up to 10 % by weight or even up to 20 % by weight of water.

Suitable inert blowing agents include, for example, hydrocarbons, dialkyl ethers, alkyl alkanoates, aliphatic and cycloaliphatic hydrofluorocarbons, hydrochlorofluorocarbons, chlorofluorocarbons and fluorine-containing ethers. Suitable hydrocarbon blowing agents include lower aliphatic or cyclic hydrocarbons such as n-pentane, isopentane, cyclopentane, neopentane, hexane and cyclohexane.

The insolubility of the inert organic liquid in the reaction mixture usually arises from the fact that it is insoluble in one or more of the major ingredients of the foam formulation, especially the isocyanate-reactive material and/or the polyisocyanate.
Solubility in these materials can be determined by conventional techniques.

The expression "inert" is to be understood as meaning that the organic liquid is chemically inert to the other ingredients of the foam formulation.

Examples of insoluble inert organic liquids include fluorinated compounds, aliphatic, cycloaliphatic or aromatic hydrocarbons.

It is preferred to use as inert insoluble organic liquid a highly fluorinated or perfluorinated compound.

Suitable highly fluorinated or perfluorinated compounds which may be used in the present invention include aliphatic or cycloaliphatic compounds such as alkanes or cycloalkanes which may be substituted or non substituted, cyclic or non cyclic compounds containing at least one O atom, which may be substituted or non substituted, such as fluorinated ethers, cyclic or non cyclic compounds containing at least one N atom, which may be substituted or non substituted, such as fluorinated amines, cyclic or non cyclic compounds containing O and N atoms, which may be substituted or non substituted, such as fluorinated hydroxyl amines or fluorinated amino-ethers, cyclic or non cyclic compounds containing at least one S atom, which may be substituted or non substituted, such as fluorinated sulfones, for example CF₃SO₂CF₃ and CF₃SO₂CF₂CF₃.

Particular examples of highly fluorinated or perfluorinated hydrocarbons include: perfluoronorbornadiene, perfluorodecaline, perfluorodimethylcyclohexane, perfluoromethylcyclohexane, perfluoro-1-methyldecaline, perfluorophenantrene perfluorodimethylcyclobutane, perfluoropentane, perfluorohexane, C₉F₁₉CHF₂, C₈F₁₈, C₇F₁₆ and their cyclic derivatives.

Particular examples of highly fluorinated or perfluorinated oxygen containing compounds include: perfluorobutyltetrahydrofuran and perfluoropropyltetrahydrofuran.

Particular examples of highly fluorinated or perfluorinated compounds containing N atoms or N atoms and O atoms include fluorine-containing tertiary amines, for example, (CHF₂)₃N, CF₃N(CHF₂)₂, (CF₃)₂NC₂F₅, CF₃N(C₂F₅)₂, (C₂F₅)₃N, (CF₃)₂NCF₂CF₂H, CF₃CH₂N(CH₃)₂ and N-methyloctafluoropyrrolidine fluorine-containing hydrazines, for example, (CF₃)₂NN(CF₃)₂, or (CF₃)₂NOCH₃, (CF₃)₂NOC₂F₅, CF₃NOCF₂CF₂ and (CF₃)₂NOCF₂C(CF₃)FON(CF₃)₂ and fluorine-containing amino-ethers, for example (CF₃)₂NCF₂CF₂OCF₃ and most preferably perfluoro-N-methylmorpholine, perfluorotripentylamine, perfluorotributylamine, perfluorotripropylamine, perfluoro-N-methylpiperidine.

Other suitable fluorinated compounds include the perfluorinated ethers commercialised by Montefluos S.p.A. as Galden HT 200, Galden HT 230, Galden HT 250 and Galden HT 270 (Galden is a trademark).

To ensure zero ozone depletion potential, it is preferred to use fluorinated compounds containing no other halogen atoms.

The inert insoluble organic liquid is used in the process of the present invention in amounts ranging from 0.05 to 5 % by weight based on the total reaction system.

The substantially insoluble inert organic liquid will usually be incorporated in the foam-forming reaction mixture in the form of an emulsion or preferably a microemulsion in one of the major components, that is to say in the isocyanate-reactive component and/or the polyisocyanate component. Such emulsions or microemulsions may be prepared using conventional techniques and suitable emulsifying agents.

Emulsifying agents suitable for preparing stable emulsions or microemulsions of fluorinated liquid compounds in organic polyisocyanates and/or isocyanate-reactive compounds include surfactants chosen from the group of nonionic, ionic (anionic or cationic) and amphoteric surfactants. Preferred surfactants for emulsifying the fluorinated liquid compound in the isocyanate-reactive composition are fluoro surfactants and/or alkoxylated alkanes. Particular examples of fluoro surfactants include fluorinated alkyl polyoxyethylene ethanols, fluorinated alkyl alkoxylates and fluorinated alkyl esters. Preferred surfactants for emulsifying the fluorinated liquid compound in the polyisocyanate composition are non-isocyanate-reactive silicone surfactants such as Tegostab B 8407 available from Goldschmidt and SR 234 available from Union Carbide.

Preferred metal salt catalysts for use in the present invention are those selected among group Ia and group IIa metal salts, more preferably among group Ia and group IIa metal carboxylates.

Particularly suitable catalysts for use in the present invention are potassium acetate and potassium ethylhexoate.

The metal salt catalyst is used in the process of the present invention in amounts ranging from 0.01 to 3 % by weight based on the total reaction system.

Organic polyisocyanates which may be used in the method of the present invention include aliphatic, cycloaliphatic, araliphatic and aromatic polyisocyanates but especially the polyisocyanates proposed in literature for use in the production of foams. Of particular importance are aromatic diisocyanates such as tolylene and diphenylmethane diisocyanate in the well known pure, modified or crude forms. Special mention may be made of the so-called MDI variants (diphenylmethane diisocyanate modified by the introduction of urethane, allophanate, urea, biuret, carbodiimide, uretonimine or isocyanurate residues) and the mixtures of diphenylmethane diisocyanate(s) and oligomers thereof known in the art as "crude" or "polymeric" MDI (polymethylene polyphenylene polyisocyanates).

In addition to the ingredients already mentioned the foam-forming mixture may contain one or more other auxiliaries or additives conventional to isocyanate-based foam formulations. Such optional additives include further conventional catalysts, fire retardants, smoke suppressants, organic or inorganic fillers, thixotropic agents, dyes, pigments, mould release agents, surfactants, foam stabilisers and the like.

Isocyanate indices of from 70 to 140 will typically be used in operating the method of the present invention but lower indices may be used if desired. Higher indices, for example 150 to 500 or even up to 3000, may be used in conjunction with trimerisation catalysts to make foams containing isocyanurate linkages.

To reduce the number of component streams delivered to the final mixing apparatus, the cyclic isocyanate-reactive blowing promotor, the catalyst, the inert insoluble organic liquid and optionally other additives may be premixed with one of the major components of the foam formulation, in general with the isocyanate-reactive component.

Therefore the present invention also provides an isocyanate-reactive composition comprising a blowing promotor being an isocyanate-reactive cyclic compound of formula: 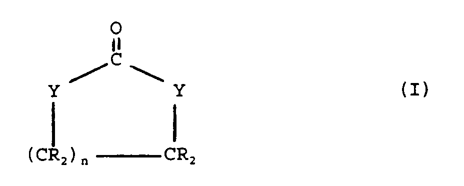
wherein
Y is O or NR¹ wherein each R¹ independently is a lower alkyl radical of C₁-C₆ or a lower alkyl radical substituted with an isocyanate-reactive group;
each R independently is hydrogen, a lower alkyl radical of C₁-C₆ or (CH₂)ₘ-X wherein X is an isocyanate-reactive group which is OH or NH₂ and m is 0, 1 or 2; and
n is 1 or 2;
with the proviso that at least one of R¹ or R is or comprises an isocyanate-reactive group;
an inert insoluble organic liquid which is present as the dispersed phase of an emulsion or a microemulsion and a metal salt catalyst, characterised in that said isocyanate-reactive composition comprises a polyol or polyol mixture of average nominal functionality 2 to 3 and number average equivalent molecular weight between 31 and 750.

The method of the present invention may be put into practice making use of conventional techniques. Thus known mixing methods may be used and the foams may be produced in the form of slabstock, mouldings, cavity fillings, sprayed foam, frothed foam or laminates with other materials such as hardboard, plasterboard, paper, plastics or metal.

Rigid polyurethane foams prepared in accordance with the method of the invention are characterised by having open cells and a closed cell content below 10 %.

They are of particular use for evacuated insulation panel applications where they show superior thermal insulation properties. Further outgassing (i.e. gases such as air, water vapour or blowing agent diffusing gradually from closed cell portions) of an open celled rigid polyurethane foam of the present invention is decreased compared to foams with higher closed cell content and thus internal pressure increase with lapse of time of evacuated insulation panels filled with the present foams is decreased leading to improved thermal insulation. Further the time needed to evacuate the panel to the desired pressure level is decreased owing to the lower closed cell content of the present foam.

Evacuated insulation panels generally comprise a low thermal conductivity filler material (such as open celled polyurethane foam) and a vessel formed of a gastight film enveloping said filler, the whole being evacuated to an internal pressure of about 5 mbar or less and then hermetically sealed.

General descriptions of the construction of evacuated insulation panels and their use in thermal devices can be found in US Patents Nos 5,066,437, 5,032,439 and 5,076,984 and European Patent Publications Nos 434266, 434225 and 181778, all incorporated herein by reference as well as the references mentioned therein.

The invention is illustrated but not limited by the following examples.

### Example 1

The following ingredients were used:
Daltolac XR 144 being a polyether polyol of molecular weight 585 and functionality 3.2 available from Imperial Chemical Industries PLC;
Daltolac R 260 being a polyether polyol of molecular weight 750 and functionality 4.2 available from Imperial Chemical Industries PLC;
Daltolac R 170 being a polyether polyol of molecular weight 490 and functionality 4.3 available from Imperial Chemical Industries PLC;
Daltolac R 104 being a polyether polyol of molecular weight 170 and functionality 3 available from Imperial Chemical Industries PLC;
Daltolac R 040 being a polyether polyol of molecular weight 375 and functionality 3 available from Imperial Chemical Industries PLC;
Daltolac R 090 being a polyether polyol of molecular weight 310 and functionality 3 available from Imperial Chemical Industries PLC;
Daltolac P 744 being a polyester polyol of molecular weight 375 and functionality 2.4 available from Imperial Chemical Industries PLC;
Tegostab B 8404 being a silicone surfactant available from Goldschmidt;
Catalyst LB being a metal salt catalyst available from Imperial Chemical Industries PLC;
Fixapret NF being a cyclic urea available from BASF;
perfluoropentane (PFP) available from 3M;
Suprasec DNR being a polymeric MDI available from Imperial Chemical Industries PLC.

Rigid foams were prepared by using the formulations (amounts are given in parts by weight) as listed in Table 1. Some foam properties are also given in Table 1: isocyanate index, free rise density expressed in kg/m³ and closed cell content (CCC) given in %.

These examples show that using polyol (mixtures) having functionalities above 3 (foam nos 1, 2, 3 and 10) yield foams having high closed cell contents (above 20 %) whereas using polyol (mixtures) having functionalities between 2 and 3 (foam nos 4, 5, 6, 7, 8, 9) yield foams having closed cell contents below 10 %.

**Table 1**

| Foam No. | 1 | 2 | 3 | 4 | 5 | 6 | 7 | 8 | 9 | 10 |
|---|---|---|---|---|---|---|---|---|---|---|
| Polyol Component | | | | | | | | | | |
| XR 144 | 100 | - | - | - | - | - | - | 70 | - | - |
| R 260 | - | 100 | - | - | - | - | - | - | - | - |
| R 170 | - | - | 100 | - | - | - | - | - | - | 70 |
| R 104 | - | - | - | 100 | - | - | - | - | - | - |
| R 040 | - | - | - | - | 100 | - | - | - | 70 | - |
| R 090 | - | - | - | - | - | 100 | - | - | - | - |
| P 744 | - | - | - | - | - | - | 100 | 30 | 30 | 30 |
| B 8404 | 2 | 2 | 2 | 2 | 2 | 2 | 2 | 2 | 2 | 2 |
| LB | 0.8 | 0.8 | 0.8 | 0.8 | 0.8 | 0.8 | 0.8 | 0.8 | 0.8 | 0.8 |
| Fixapret | 4.2 | 4.2 | 4.2 | 4.2 | 4.2 | 4.2 | 4.2 | 4.2 | 4.2 | 4.2 |
| PFP | 5 | 5 | 5 | 5 | 5 | 5 | 5 | 5 | 5 | 5 |

| Isocyanate Component | | | | | | | | | | |
|---|---|---|---|---|---|---|---|---|---|---|
| DNR | 152 | 152 | 214 | 388 | 200 | 231 | 169 | 158 | 191 | 201 |

| Foam Properties | | | | | | | | | | |
|---|---|---|---|---|---|---|---|---|---|---|
| index | 140 | 140 | 140 | 140 | 140 | 140 | 140 | 140 | 140 | 140 |
| density | 33 | 41 | 47 | 65 | 34 | 40 | 44 | 34 | 34 | 44 |
| CCC | 22 | 57 | 87 | 6 | 4 | 6 | 7 | 4 | 2 | 76 |

Density (core density) was measured according to DIN 53420 standard. Closed cell content was measured according to BS 4370 Method 10 standard and represents volume % of closed cells.

## Claims

1. Process for the preparation of rigid foams comprising the step of reacting an organic polyisocyanate with an isocyanate-reactive material in the presence of a blowing promotor being an isocyanate-reactive cyclic compound of formula: 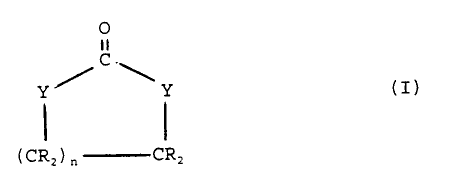 wherein
Y is O or NR¹ wherein each R¹ independently is a lower alkyl radical of C₁-C₆ or a lower alkyl radical substituted with an isocyanate-reactive group;
each R independently is hydrogen, a lower alkyl radical of C₁-C₆ or (CH₂)ₘ-X wherein X is an isocyanate-reactive group which is OH or NH₂ and m is 0, 1 or 2; and
n is 1 or 2;
with the proviso that at least one of R¹ or R is or comprises an isocyanate-reactive group;
and in the presence of an inert insoluble organic liquid which is present as the dispersed phase of an emulsion or a microemulsion and in the presence of a metal salt catalyst, characterised in that the isocyanate-reactive material comprises a polyol or polyol mixture of average nominal functionality 2 to 3 and number average equivalent molecular weight between 31 and 750.

2. Process according to claim 1 wherein said polyol or polyol mixture has an average nominal functionality 2.5 to 2.9.

3. Process according to claim 1 or 2 wherein said polyol or polyol mixture has a hydroxyl value of between 80 and 2000 mg KOH/g.

4. Process according to any one of the preceding claims wherein said polyol is a polyether polyol or a polyester polyol.

5. Process according to any one of the preceding claims wherein the isocyanate-reactive cyclic blowing promotor is a cyclic urea of formula

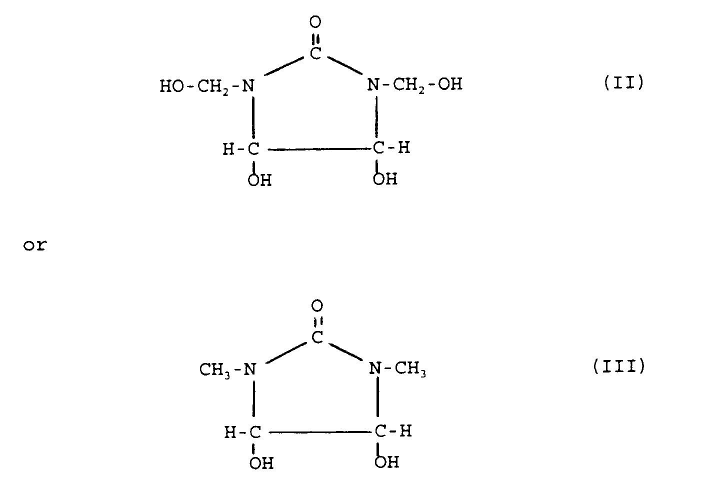

6. Process according to any one of the preceding claims wherein the isocyanate-reactive cyclic blowing promotor is used in amounts ranging from 1 to 99 % by weight based on the total isocyanate-reactive material.

7. Process according to any one of the preceding claims wherein the inert insoluble organic liquid is a highly fluorinated or perfluorinated compound.

8. Process according to claim 7 wherein the inert insoluble organic liquid is perfluoropentane.

9. Process according to any one of the preceding claims wherein the inert insoluble organic liquid is added in amounts ranging from 0.05 to 5 % by weight based on the total reaction system.

10. Process according to any one of the preceding claims wherein the metal salt catalyst is a group Ia or group IIa metal carboxylate.

11. Process according to any one of the preceding claims wherein the metal salt catalyst is added in amounts ranging from 0.01 to 3 % by weight based on the total reaction system.

12. Isocyanate-reactive composition comprising a blowing promotor being an isocyanate-reactive cyclic compound of formula: 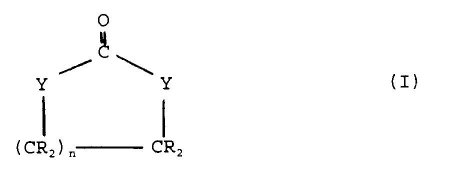 wherein
Y is O or NR¹ wherein each R¹ independently is a lower alkyl radical of C₁-C₆ or a lower alkyl radical substituted with an isocyanate-reactive group;
each R independently is hydrogen, a lower alkyl radical of C₁-C₆ or (CH₂)ₘ-X wherein X is an isocyanate-reactive group which is OH or NH₂ and m is 0, 1 or 2; and
n is 1 or 2;
with the proviso that at least one of R¹ or R is or comprises an isocyanate-reactive group;
an inert insoluble organic liquid which is present as the dispersed phase of an emulsion or a microemulsion and a metal salt catalyst, characterised in that said isocyanate-reactive composition comprises a polyol or polyol mixture of average nominal functionality 2 to 3 and number average equivalent molecular weight between 31 and 750.

13. Rigid open celled polyurethane foam obtainable by the process as defined in any one of claims 1 to 11.

14. Evacuated insulation panel comprising a filler material and a vessel formed of a gastight film enveloping said filler, characterised in that said filler material comprises a rigid open celled polyurethane foam as defined in claim 13.
